# EUROPÄISCHE PATENTSCHRIFT

(11) **EP 2 468 102 B1**
(45) Veröffentlichungstag und Bekanntmachung des Hinweises auf die Patenterteilung: **03.04.2019**
(21) Anmeldenummer: 10401226.5
(22) Anmeldetag: 23.12.2010
(51) Int. Cl.: A21B 3/04, F24C 15/32

(54) **Gargerät**
Cooking device
Appareil de cuisson

(43) Veröffentlichungstag der Anmeldung: 27.06.2012
(73) Patentinhaber: Miele & Cie. KG, 33332 Gütersloh (DE)
(72) Erfinder: Berger, Uwe, 32278, Kirchlengern (DE); Dittrich, Hartmut, 32257, Bünde (DE); Metz, Thomas, 32257, Bünde (DE); Oberhaus, Jens, 32130 Enger (DE); Schnee, Alexander, 32257, Bünde (DE)

(56) Entgegenhaltungen:
- EP-A2- 1 517 095
- EP-A2- 1 921 387
- US-A1- 2006 112 947
- US-B1- 6 904 903

## Beschreibung

Die vorliegende Erfindung betrifft ein Gargerät mit wenigstens einem Garraum, der über wenigstens eine außerhalb des Garraumes angeordnete Dampfquelle beheizbar ist.

Ein erfindungsgemäßes Gargerät kann insbesondere auch als Dampfgargerät ausgebildet sein, kann aber zur Unterstützung auch eine oder mehrere konventionelle Heizquellen umfassen.

Im Stand der Technik sind Gargeräte beziehungsweise Dampfgargeräte bekannt geworden, bei denen die Beheizung des Gargerätes im Wesentlichen oder sogar vollständig über eine Dampfquelle erfolgt, die dem Garraum beispielsweise 100 Grad C heißen Dampf zuführt. Eine derartige Vorrichtung wird in der Druckschrift US 6 904 903 B1 beschrieben. Je nach Art des Gargutes kann auch das Einbringen von Dampf mit einer geringeren Temperatur, beispielsweise 70 Grad C erforderlich sein, um optimale Garergebnisse erzielen zu können. Die genaue Dampftemperatur hängt bei solchen offenen Systemen vom herrschenden Umgebungsdruck ab, der insbesondere von der geodätischen Höhenlage eines solchen Dampfgargeräts abhängt.

Dampfgargeräte für den Einsatz in einer Küche werden häufig drucklos ausgelegt und weisen oft eine Dampfeinlassöffnung in den Garraum sowie eine Dampfauslassöffnung aus dem Garraum heraus auf. Ein Dampfgargerät mit einem Gasaustausch zwischen Garraum und Umgebung ist aus der Druckschrift EP 1 921 387 A2 bekannt. Dabei erfolgt über die Dampfauslassöffnung ein Gasaustausch mit der Umgebung. Herrscht in dem Garraum durch kondensierenden Dampf bedingt ein Unterdruck vor, so wird beispielsweise über die Dampfauslassöffnung Luft aus der Umgebung des Gargerätes in den Garraum hineingesogen. Wird hingegen zuviel Dampf in den Garraum hineingeleitet, so tritt überschüssiger Dampf aus der Dampfauslassöffnung aus.

Damit aus dem Gargerät während des Betriebes nicht zuviel Dampf austritt und es somit zu einer unerwünschten Befeuchtung der Umgebung des Gargerätes kommt und zur besseren Energieeffizienz werden Garprozesse mit solchen Dampfgargeräten in der Regel über einen Temperaturfühler geregelt. Dabei wird der Temperaturfühler in dem Garraum angeordnet, der die dort vorherrschende Temperatur erfasst. Wenn die detektierte Temperatur geringer als die gewünschte Temperatur ist, wird die Heizquelle aktiviert, um Dampf in den Garraum einzuleiten. Wenn die gewünschte Temperatur erreicht oder überschritten wird, wird die Dampfquelle ausgeschaltet.

Deshalb werden im Garraum eines solchen Gargerätes unterschiedlichste Anschlüsse für beispielsweise die Dampfeinlassöffnung und die Dampfauslassöffnung erforderlich.

Nachteilig an den bekannten Gargeräten ist der Montageaufwand, da alle Komponenten einzeln montiert werden müssen.

Vor dem Hintergrund dieses Standes der Technik ist es deshalb die Aufgabe der vorliegenden Erfindung, ein Gargerät zur Verfügung zu stellen, welches einfacher zu montieren ist.

Diese Aufgabe wird gelöst durch ein Gargerät mit den Merkmalen des Anspruchs 1. Bevorzugte Weiterbildungen der Erfindung sind Gegenstand der Unteransprüche. Weitere Vorteile, Merkmale und Eigenschaften der vorliegenden Erfindung ergeben sich aus dem Ausführungsbeispiel.

Das erfindungsgemäße Gargerät weist wenigstens einen Garraum auf, der über wenigstens eine außerhalb des Garraumes angeordnete Dampfquelle beheizbar ist. Dabei sind an dem Garraum mehrere Dampfeinlassöffnungen vorgesehen vorgesehen, um Dampf von der Dampfquelle in den Garraum einzuleiten. Weiterhin ist wenigstens eine Dampfauslassöffnung an dem Garraum vorgesehen, durch welche Dampf aus dem Garraum austreten kann. Dabei sind die Dampfeinlass- und Dampfauslassöffnungen an einer gemeinsamen Baueinheit angeordnet, die austauschbar an dem Garraum vorgesehen ist.

Erfindungsgemäß sind die Dampfeinlassöffnungen seitlich ausgerichtet und in etwa parallel zu einer Wandung des Garraums und etwa in entgegengesetzten Richtungen ausgerichtet.

Das erfindungsgemäße Gargerät hat viele Vorteile. Das Gargerät erlaubt eine einfachere Montage, da die Dampfeinlassöffnungen und die eine Dampfauslassöffnung oder die mehreren Dampfauslassöffnungen an einer gemeinsamen Baueinheit angeordnet werden. Eine separate Montage der Dampfeinlassöffnungen und Dampfauslassöffnungen in dem relativ schwierig zugänglichen Garraum ist nicht erforderlich. Es wird eine einfachere Vormontage der Baueinheit ermöglicht, die anschließend insgesamt in den Garraum eingebracht wird.

Ein weiterer erheblicher Vorteil des erfindungsgemäßen Gargerätes besteht darin, dass für den Kunden die Reinigung des Garraums und des Gargeräts insgesamt erheblich vereinfacht wird. Da die den Prozess steuernden Komponenten an der austauschbaren Baueinheit angeordnet sind, können die übrigen Flächen und Wandungen des Garraumes einfacher ausgestaltet und von dem Kunden in kurzer Zeit gründlich gereinigt werden. Dabei ergibt sich eine erhebliche Zeitersparnis und eine erhöhte Bequemlichkeit, da an den Wandungen keine den Prozess steuernden Komponenten vorgesehen sind, die leicht abbrechen oder beschädigt werden können.

Ein erfindungsgemäßes Gargerät ist insbesondere als Dampfgargerät ausgeführt, kann aber neben einer Dampfquelle auch noch eine oder mehrere weitere an sich bekannte Heizquellen aufweisen.

Die Dampfauslassöffnung dient nicht nur zum Auslassen von Dampf aus dem Garraum nach außen, sondern dient auch zum Gastaustausch des Garraums mit der Umgebung. Je nachdem, ob in dem offenen System ein Über- oder Unterdruck vorliegt, strömt Gas bzw. Dampf durch die Dampfauslassöffnung aus dem Garraum in die Umgebung oder aus der Umgebung zurück in den Garraum hinein.

Es ist besonders bevorzugt, dass an der gemeinsamen Baueinheit wenigstens ein Temperaturfühler zur Erfassung einer charakteristischen Temperatur des Garraumes angeordnet ist. Insbesondere ist der Temperaturfühler an der Baueinheit befestigt.

Ein Temperaturfühler an der austauschbaren Baueinheit ermöglicht einen besonders einfachen Aufbau und eine deutlich vereinfachte Montage. Auch die Säuberung des Gerätes wird nochmals vereinfacht, da der empfindliche Temperaturfühler in einem solchen Gerät an der der austauschbaren Baueinheit vorgesehen ist, sodass die weiteren Flächen frei von solchen empfindlichen Komponenten sind.

Vorzugsweise ist die gemeinsame Baueinheit an der Rückwand des Garraumes angeordnet bzw. befestigt. Dabei ist die gemeinsame Baueinheit insbesondere zentrisch an der Rückwand vorgesehen, um einen symmetrischen Aufbau zu ermöglichen. Die Anordnung der Baueinheit an einer anderen Wandung innerhalb des Garraums liegt im Rahmen der Erfindung.

Erfindungsgemäß sind an der gemeinsamen Baueinheit mehrere Dampfeinlassöffnungen vorgesehen, welche auf mehreren Ebenen höhenversetzt angeordnet sind. Dabei ist es möglich, dass zwei oder mehr Dampfeinlassöffnungen auf der gleichen Ebene vorgesehen sind.

Mehrere Dampfeinlassöffnungen, die höhenversetzt an der gemeinsamen Baueinheit vorgesehen sind, erlauben eine besonders homogene Verteilung des Dampfes in den Garraum hinein. Das ist insbesondere beim Aufheizvorgang ein erheblicher Vorteil, da durch die homogene Verteilung des Dampfes in dem Garraum das Garen von empfindlichen Speisen schonender stattfindet. Vorteilhaft kann dadurch auf die Anordnung eines Gebläses zur Verteilung des Dampfes im Garraum verzichtet werden.

In allen Ausgestaltungen ist es bevorzugt, dass wenigstens zwei unterschiedliche Dampfeinlassöffnungen separat ansteuerbar sind. Insbesondere sind die Dampfeinlassöffnungen wenigstens zweier Ebenen separat ansteuerbar. Dadurch wird es beispielsweise ermöglicht, dass zum Ende des Garvorgangs nur die Dampfeinlassöffnungen im unteren Bereichen des Garraums Dampf in den Garraum hineintragen, während die oberen Dampfeinlassöffnungen abgeschaltet sind oder nur eine erheblich geringere Dampfmenge einlassen.

Wenn nur noch eine geringe Dampfmenge in den Garraum eingetragen werden muss, kann es von Vorteil sein, den Dampf in einem unteren Bereich des Garraums einzulassen, da der Heißdampf von selbst nach oben steigt. Dementsprechend kann die Dampfauslassöffnung in einem unteren Bereich des Garraumes vorgesehen sein, damit durch die Dampfauslassöffnung die kühlste Luft bzw. der Dampf mit der geringsten Temperatur aus dem Garraum nach außen gedrückt wird. Die Anordnung von mehreren Dampfauslassöffnungen, insbesondere im Bereich der einzelnen Ebenen liegt im Rahmen der Erfindung.

Die Dampfeinlassöffnungen sind seitlich ausgerichtet. Dabei sind die Dampfeinlassöffnungen etwa parallel zu einer Wandung des Garraums ausgerichtet und insbesondere paarweise vorgesehen. Dann sind die Dampfeinlassöffnungen vorzugsweise in etwa entgegengesetzte Richtungen seitlich ausgerichtet. Vorzugsweise sind die Dampfeinlassöffnungen an der gemeinsamen Baueinheit vorgesehen, die an der Rückwand des Garraums angeordnet ist, sodass die Dampfeinlassöffnungen den Dampf etwa parallel zur Rückwand des in den Garraum auslassen.

Um eine noch verbesserte Durchmischung der Garraumatmosphäre zu erzielen, sind die Dampfeinlassöffnungen vorzugsweise wenigstens teilweise als Dampfdüse ausgebildet. Eine Querschnittsverengung in der Dampfeinlassöffnung führt zu einer erhöhten Strömungsgeschwindigkeit des Dampfes im Bereich der Querschnittsverengung und somit zu einer erhöhten Strömungsgeschwindigkeit, mit der der Dampf in den Garraum eingebracht wird. Eine solche erhöhte Strömungsgeschwindigkeit führt nach dem Freistrahlprinzip zu einer starken Durchmischung mit der Garraumatmosphäre, sodass insgesamt homogenere Verhältnisse in dem Garraum erzielt werden.

Besonders bevorzugt ist der Temperaturfühler an der Dampfauslassöffnung vorgesehen und kann insbesondere auch innerhalb der Dampfauslassöffnung angeordnet sein.

Eine solche Ausgestaltung führt zu einer besonders kompakten gemeinsamen Baueinheit, die einfach zu montieren und einfach zu warten und zu reinigen ist. Außerdem wird durch die Anordnung des Temperaturfühlers eine verbesserte Regelgenauigkeit des Gargerätes erzielt.

Es ist möglich, dass an der gemeinsamen Baueinheit wenigstens eine Leuchtquelle vorgesehen ist, um gleichzeitig auch als Lichtquelle für den Garraum zu dienen. Dadurch wird ein insgesamt noch einfacherer Aufbau erzielt, da praktisch sämtliche Einbauten und Steuerkomponenten in bzw. an der gemeinsamen Baueinheit vorgesehen sind.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine schematische Voransicht eines erfindungsgemäßen Gargerätes;
- Figur 2: eine vergrößerte schematische Vorderansicht der gemeinsamen Baueinheit des Gargeräts gemäß Figur 1;
- Figur 3: eine stark schematische Querschnittsansicht des Gargeräts gemäß Figur 1;
- Figur 4: eine geschnittene Draufsicht auf das Gargerät gemäß Figur 1;
- Figur 5: den Temperaturverlauf über der Zeit für zwei unterschiedliche Beladungen des Garraums; und
- Figur 6: den zeitlichen Temperatur- und Heizverlauf für die beiden unterschiedlichen Beladungsmengen gemäß Figur 1.

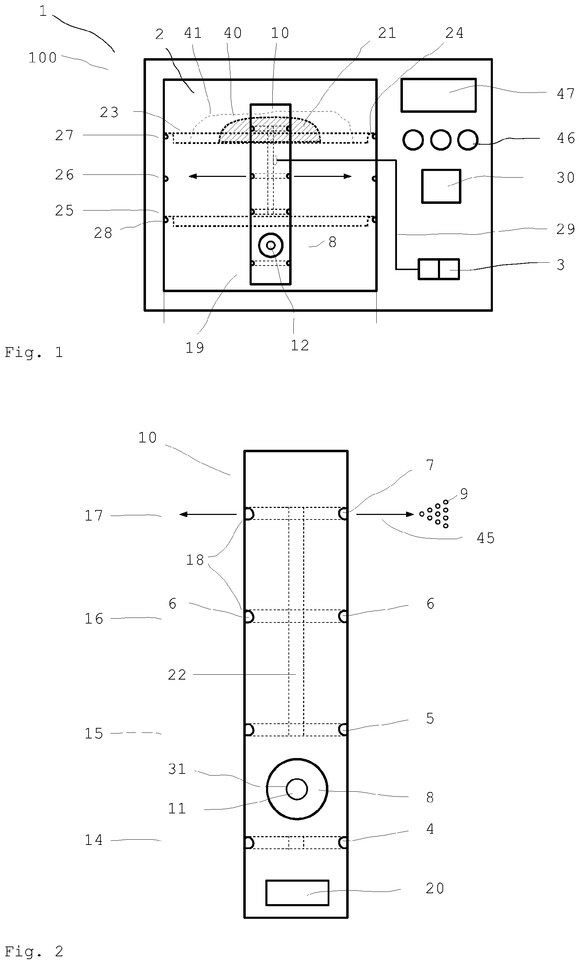

Mit Bezug auf die beiliegenden Figuren 1 bis 6 wird im Folgenden ein Ausführungsbeispiel eines erfindungsgemäßen Gargeräts 1 beschrieben, welches hier als Dampfgargerät 100 ausgeführt ist und welches sowohl als Einbaugerät als auch als alleinstehendes Gargerät ausgebildet sein kann.

In Figur 1 ist das Gargerät 1 in einer stark schematischen und vereinfachten Darstellung abgebildet. Das Gargerät 1 weist einen Garraum 2 auf, der wenigstens teilweise über Dampf wenigstens einer Dampfquelle 3 beheizbar ist. Dabei kann die Dampfquelle 3, wie in Figur 1 angedeutet, über mehrere Heizquellen verfügen, die nach Bedarf einzeln oder auch gesamt ansteuerbar sind.

Die Dampfquelle 3 leitet den erzeugten Dampf 9 (vgl. Figur 2) über Dampfeinlassöffnungen 4 bis 7 in den Garraum 2 ein. Eine zentrale Dampfauslassöffnung 8 ist mit der Umgebung 50 des Gargerätes 1 verbunden, sodass das Gargerät 1 bzw. der Dampfgargerät 100 als drucklos arbeitendes System ausgeführt ist. Durch die Auslassöffnung 8 kann überschüssiger Dampf 9 aus dem Inneren des Garraums 2 nach außen abgeführt werden oder aber es kann Luft aus der Umgebung 50 angesaugt werden, wenn im Inneren des Garraums 2 ein Unterdruck vorherrscht, wenn dort beispielsweise vorhandener Dampf 9 kondensiert und nicht genug Dampf 9 durch die Dampfquelle 3 nachgeliefert wird. Es können auch mehrere Dampfauslassöffnungen 8 vorgesehen sein.

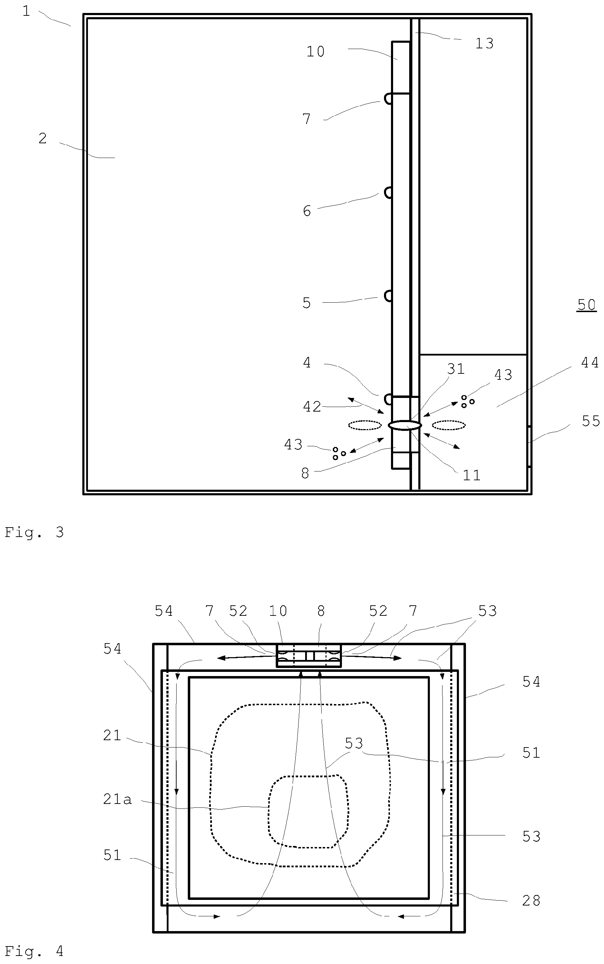

Figur 2 zeigt die gemeinsame Baueinheit 10 in vergrößerter Darstellung, die an der Rückwand 13 (vgl. Fig. 3) des Garraumes 2 austauschbar angeordnet ist. An der gemeinsamen Baueinheit 10 sind hier die insgesamt acht Dampfeinlassöffnungen 4 bis 7 vorgesehen, die auf vier Ebenen 14 bis 17 jeweils paarweise angeordnet sind. Jeweils zwei Dampfeinlassöffnungen 4, 5, 6 und 7 sind paarweise an der Baueinheit 10 vorgesehen und sind so ausgebildet, dass der aus dem Dampfeinlassöffnungen 4 bis 7 austretende Dampf 9 in etwa entgegengesetzte Richtungen gelenkt wird, wie die eingezeichneten Strahlrichtungen 45 an den Dampfeinlassöffnungen 7 zeigen. Jeweils zwei Dampfeinlassöffnungen 4 bis 7 sind auf jeder Ebene 14 bis 17 vorgesehen.

Die Dampfauslassöffnung 8 ist hier zentral zwischen der untersten Ebene 14 und der zweituntersten Ebene 15 und somit zwischen den Dampfeinlassöffnungen 4 und 5 angeordnet.

Zentrisch ist innerhalb der Dampfauslassöffnung 8 eine Sensoreinrichtung 31 angeordnet, die einen Temperaturfühler 11 umfasst. Durch die Anordnung des Temperaturfühlers 11 innerhalb der Dampfauslassöffnung 8 wird sichergestellt, dass durch die Dampfauslassöffnung 8 strömendes Gas den Temperaturfühler 11 mit der jeweils vorherrschenden Temperatur wenigstens teilweise beaufschlagt, sodass durch Gasaustritt oder Gaseintritt hervorgerufene Temperaturänderungen schnell und sicher durch den Temperaturfühler 11 erfasst werden können.

Wie der Darstellung nach Figur 1 entnommen werden kann, sind zwischen den Ebenen 14, 15, 16 und 17 drei Garebenen 25, 26 und 27 vorgesehen. Dabei ist in Figur 1 an den Garebenen 25 und 27 jeweils ein als Garblech ausgeführter Garbehälter 23 angeordnet. Der Garbehälter 23 ist an den Garebenen 25 und 27 gestrichelt eingezeichnet. Zusätzlich kann auch an der Garebene 26 ein entsprechender Garbehälter 23 angeordnet werden.

Die Anordnung der Garebenen 25, 26 und 27 ist derart, dass jede Garebene 25 bis 27 jeweils von oben und unten mit Dampf 9 der einen Dampfquelle 3 oder mehrerer Dampfquellen 3 beaufschlagbar ist. Dabei wird die unterste Garebene 25 durch Dampf aus den Dampfeinlassöffnungen 4 und 5 beaufschlagt und die Garebene 26 wird von unten durch Dampf 9 aus den Dampfeinlassöffnungen 5 und von oben durch Dampf 9 aus den Dampfeinlassöffnungen 6 beaufschlagt. Die Garebene 27 wird wiederum von oben durch Dampf 9 aus den Dampfeinlassöffnungen 7 und von unten durch Dampf 9 aus den Dampfeinlassöffnungen 6 beaufschlagt.

Jeder Garbehälter 23 ist hier etwa wannenförmig ausgebildet und weist einen Aufnahmerand 24 auf, der auf Haltern 28 des Garraumes 2 aufliegt. Die Halter 28 definieren die Garebenen und stützen die Garbehälter 23 nach unten ab. Durch den Aufnahmerand 24 des Garbehälters 23 und die Anordnung der Dampfeinlassöffnungen 4 bis 7 wird es erreicht, dass in den Garraum 2 eintretender Dampf 9 durch die zwischen dem Garbehälter 23 und den Wandungen 54 des Garraums 2 gebildeten Führungskanäle bzw. Dampfkanäle 51 geleitet wird. Der hinten an der Rückwand 13 aus der Baueinheit 10 austretende Dampf wird an der Rückwand 13 entlang geleitet und entlang der Seitenwände bis zum vorderen Ende des Garraumes 2 geführt, wo er vorne um den Garbehälter 23 herumtritt und schließlich in erheblichem Maße von vorn auf das Gargut 21 geleitet wird. Zum Schluss erreicht die Strömung die Dampfauslassöffnung 8, sodass sichergestellt wird, dass das kälteste Gas aus dem Garraum 2 abgeleitet wird.

Auf der Garebene 27 sind schematisch zwei unterschiedliche Beladungen 40 und 41 mit einer zu garenden Speise bzw. einem Gargut 21 dargestellt.

Das in Figur 1 dargestellte Gargerät 1 ist mit einer Steuereinrichtung 30, mit Bedienknöpfen 46 und einer Anzeige 47 ausgerüstet, um den Betriebszustand und/oder das Geräteprogramm und weitere Informationen auszugeben. Die Dampfquelle 3 bzw. die Dampfquellen 3 sind über eine oder mehrere Dampfleitungen 29 mit den jeweiligen Dampfeinlassöffnungen 4 bis 7 verbunden.

Die einzelnen Dampfeinlassöffnungen 4 bis 7 sind jeweils als Dampfdüse 18 ausgebildet, um die Strömungsgeschwindigkeit des aus den Dampfeinlassungen 4 bis 7 ausgegebenen Dampfs 9 zu erhöhen und damit die Durchmischung mit der Garraumatmosphäre zu verbessern.

Die Dampfeinlassöffnungen 5, 6 und 7 sind über eine gemeinsame Dampfführung 22 miteinander verbunden. Die Dampfeinlassöffnungen 4 sind separat ansteuerbar. Möglich ist es auch, dass die Dampfeinlassöffnungen 5, 6 und 7 jeweils separat ansteuerbar sind.

Zum Beginn eines Garprozesses werden alle Einlassöffnungen 4 bis 7 mit maximal vorgesehener Dampfleistung beaufschlagt. Im weiteren Prozess wird die zugeführte Dampfleistung reduziert. Schließlich wird nur durch die unteren Dampfeinlassöffnungen 4 im unteren Bereich 19 Dampf in den Garraum 2 eingeleitet. Im unteren Bereich 19 ist auch die Dampfauslassöffnung 8 vorgesehen.

Wenn nur durch die Dampfeinlassöffnungen 4 im unteren Bereich 19 des Garraums 2 Dampf 9 eingeleitet wird, so wird dieser heiße Dampf automatisch in die oberen Bereiche des Garraums 2 geleitet, da heißer Dampf leichter ist. Die im unteren Bereich 19 vorgesehene Dampfauslassöffnung 8 wiederum führt im Wesentlichen die kühlste im Garraum vorhandene Atmosphäre nach außen ab.

Zur Beleuchtung des Garraums 2 und/oder der Baueinheit 10 kann eine Leuchtquelle 20 in dem Garraum 2 und insbesondere in der Baueinheit 10 integriert sein.

Figur 3 zeigt einen stark schematischen Querschnitt durch das Gargerät 1 nach Figur 1. Deutlich zu erkennen ist die an der Rückwand 13 des Garraums angeordnete Baueinheit 10.

Die Austrittsöffnungen der seitlich ausstrahlenden Dampfeinlassöffnungen 4 bis 7 sind in der Darstellung gemäß Figur 3 gut zu erkennen.

Im unteren Bereich 19 des Garraums 2 ist die Dampfauslassöffnung 8 angeordnet, so wie es schon den Figuren 1 und 2 zu entnehmen war. Der Temperaturfühler 11 ist hier zentrisch in der Dampfauslassöffnung 8 angeordnet.

Wie es in Figur 3 gestrichelt dargestellt ist, kann der Temperaturfühler 11 auch (vollständig) innerhalb des Garraums 2 oder (vollständig) außerhalb des Garraums 2 in beispielsweise dem Zwischenraum 44 angeordnet werden. Der Temperaturfühler 11 ist dabei innerhalb des Strömungsweges 42 des Gasstroms 43 durch die Dampfauslassöffnung 8 angeordnet. Dadurch, dass der Temperaturfühler 11 innerhalb des Strömungsweges 42 angeordnet ist, wird der Temperaturfühler 11 in jedem Fall mit dem durch die Dampfauslassöffnung 8 durchtretenden Gasstrom 43 beaufschlagt.

Wenn dieser Gasstrom 43 beispielsweise bei Austritt von Dampfüberschuss eine erhöhte Temperatur oder bei Lufteintritt von außen eine niedrigere Temperatur als die Garraumtemperatur aufweist, so registriert der Temperaturfühler 11 solche Temperaturänderungen direkt. Dadurch wird eine erheblich feinere Steuerung der Heizleistung und somit der Garraumtemperatur ermöglicht. Das "Atmen" des Garraumes wird weitestgehend vermieden. In Versuchen hat sich herausgestellt, dass zeitliche und örtliche Temperaturunterschiede innerhalb des Garraumes 2 weitestgehend vermieden und gegebenenfalls sogar nicht mehr erfasst werden. Optisch unschöne Verfärbungen auf Lebensmitteln werden vermieden.

Zum Austritt und zum Gasaustausch mit der Umgebung 50 sind Öffnungen 55 in dem Zwischenraum 44 vorgesehen.

In Figur 4 ist ein stark schematischer Querschnitt durch den Garraum 2 eines Gargeräts 1 bzw. Dampfgargeräts 100 etwa in Höhe der Dampfauslassöffnungen 7 kurz oberhalb der Garebene 27 aus Figur 1 dargestellt.

Die Dampfauslassöffnungen 7 sind an der Baueinheit 10 am rückwärtigen Ende des Garraumes 2 angeordnet und weisen, wie hier im Querschnitt erkennbar, Verengungen 52 am Austrittsquerschnitt auf, sodass die Dampfströmung beim Austritt aus den Dampfeinlassöffnungen 7 beschleunigt wird. Dabei wirken die Dampfeinlassöffnungen 7 als Dampfdüsen 18. Dadurch wird eine besonders intensive Vermischung des durch die Dampfeinlassöffnungen 7 in den Garraum 2 eintretenden Dampfes 9 mit der dort vorherrschenden Atmosphäre erzielt. Auch die anderen Dampfeinlassöffnungen 4 bis 6 sind hier entsprechend ausgebildet.

Die Dampfströmung 53, die aus dem Dampfeinlassöffnungen 7 in den Garraum 2 eintritt, wird etwa tangential, d.h. etwa parallel zur Rückwand 13 in den Garraum 2 eingeblasen, wobei ein leichter Winkel zur Rückwand 13 vorliegen kann. Die Rückwand bildet hier eine Wandung 54, an der der Dampfstrom entlang geführt wird. Zusammen mit dem Garbehälter 23 bilden die Rückwand 13 und die seitlichen Wandungen 54 Dampfkanäle 51, durch die der eintretende Dampf 9 geleitet wird. Insgesamt ergibt sich in starker Näherung ein Strömungsverhalten, wie es durch die mit Pfeilen gekennzeichnete Dampfströmung 53 eingezeichnet ist. Die Dampfströmung 53 nimmt dabei den Weg an der hinteren Rückwand entlang bis zur Seitenwand, von dort bis zum vorderen Ende des Garraumes, wird dort wiederum umgelenkt und gelangt über die Garebene 27 wieder zurück zur Rückwand 13.

Durch diese Anordnung wird für eine homogene Verteilung des Dampfes 9 innerhalb des Garraumes 2 gesorgt, insbesondere da der Dampf 9 insbesondere zu Beginn des Garvorganges nicht nur über die oberen Dampfeinlassöffnungen 7, sondern über alle Dampfeinlassöffnungen 4, 5, 6 und 7 in den Garraum 2 eingeleitet wird.

In Figur 4 sind zwei unterschiedliche Beladungen 40 und 41 schematisch mit auf dem Garbehälter 23 eingezeichnet.

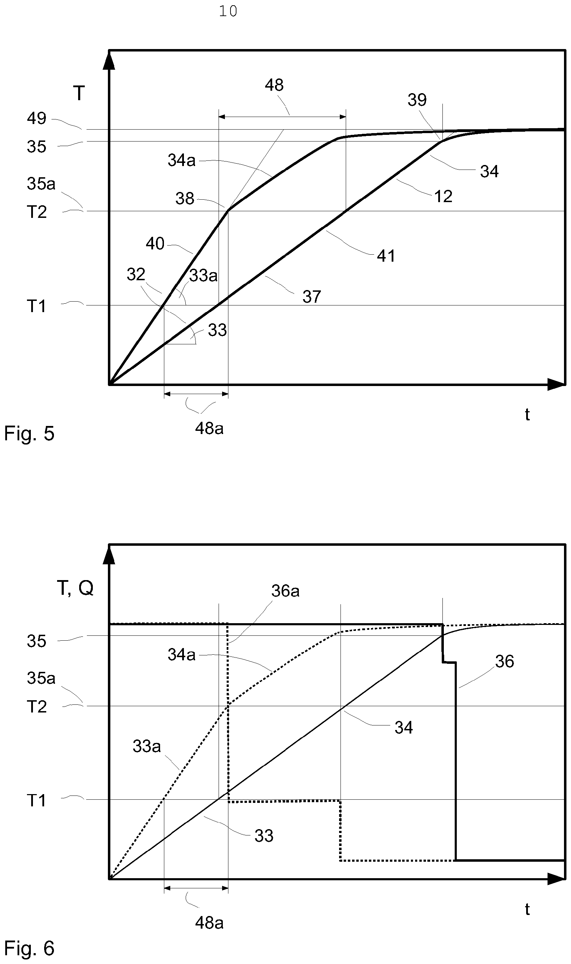

Figur 5 zeigt den Temperaturverlauf zweier unterschiedlicher Beladungen 40 und 41 über der Zeit nach dem Beginn des Garvorganges. Dabei wird in beiden Fällen zunächst mit maximal vorgesehener Dampfleistung beheizt. Es ergibt sich zunächst in genäherter Darstellung ein linearer Anstieg der Temperatur mit der Zeit, wobei der Anstieg bei der geringeren Beladung 40 steiler als bei der höheren Beladung 41 ist. Das wird durch die höhere Wärmekapazität der höheren Beladung 41 verursacht, da eine größere Wärmekapazität aufgewärmt werden muss.

Es hat sich als vorteilhaft herausgestellt, dass der Temperaturverlauf zwischen einer ersten Temperatur T1 und einer zweiten Temperatur T2 für die Steuerung des Aufheizvorganges verwendet wird. Eine geeignete Temperatur T1 ist beispielsweise 40 Grad C und eine geeignete Temperatur T2 kann beispielsweise 70 Grad C sein. Je nach herrschenden Außentemperaturen können auch höhere Temperaturen T1 wie z.B. 50 oder 55 Grad C gewählt werden. Auch eine höhere Temperatur T2, wie z.B. 75 oder 80 Grad ist möglich.

Die Zeitdauer 48 bzw. 48a, die genötigt wird, bis die charakteristische Temperatur 12 in dem Garraum von der Temperatur T1 auf die Temperatur T2 gestiegen ist, kann dazu verwendet werden, ein Maß 33 bzw. 33a für die Beladung in dem Garraum 2 zu bestimmen. Gegebenenfalls kann die benötigte Zeit auch als direktes Maß für die Beladung verwendet werden. Je größer die Zeitspanne ist, desto größer ist die Beladung im Garraum 2. So ergibt sich in anschaulicher Weise aus der Darstellung gemäß Figur 5 schon, dass die zur Zeitdauer 48a gehörende Beladung 33a geringer ist als die zur Zeitdauer 48 gehörende Beladung 33. Neben oder anstelle der Zeitdauer, die benötigt wird, um den Garraum von einer Temperatur T1 auf eine Temperatur T2 zu erhitzen, kann auch die örtliche Steigung bei einer oder mehreren Temperaturen verwendet werden, um ein Maß 33 bzw. 33a für die Beladung zu erhalten.

Der zeitliche Temperaturverlauf 34 bzw. 34a hängt von der Beladung 40 bzw. 41 und gegebenenfalls unterschiedlichen Speisen 21 bzw. 21a ab.

Nach Erreichung einer zweiten Temperatur T2 oder bei Erreichen einer Temperatur 38, die auch als Schwelltemperatur bezeichnet werden kann, kann in Fällen einer relativ geringen Beladung 40 die Heizleistung und somit die zugeführte Dampfmenge reduziert werden, um einen übermäßigen Austritt von Dampf aus dem Gargerät 1 zu vermeiden. Die reduzierte Heizleistung zeigt sich direkt in der geringeren Steigung des zeitlichen Temperaturverlaufs 34a nach der zweiten Temperatur T2 bzw. der Temperatur 38. Im weiteren Verlauf kann nach Erreichen einer Schwelltemperatur 35 die Heizleistung weiter reduziert werden, sodass die vorgesehene Gartemperatur erreicht wird, ohne ein übermäßiges Maß an Dampf aus dem Gargerät abzuführen. In bevorzugten Fällen wird die Heizleistung erst bei Erreichen einer vorgegeben oder einstellbaren Schwelltemperatur reduziert, die z.B. 80 °C betragen kann.

In allen Fällen kann bei einer höheren Beladung 41 mit maximaler Heizleistung bis zum Erreichen der Schwelltemperatur 35 oder einer höheren Temperatur 39 weiter geheizt werden, da bei hohen Beladungen 41 das im Garraum 2 vorhandene Gargut 21 die durch den Dampf 9 eingebrachte Heizleistung absorbieren kann, sodass kein Austritt von Dampf 9 aus dem Garraum 2 zu befürchten ist, bis die vorgesehene Gartemperatur 49 etwa erreicht wird. Bei einer geringeren Beladung 40 wird vorzugsweise die Heizleistung schon bei einer geringeren Temperatur 38 verringert, während bei einer höheren Beladung 41 die Heizleistung erst bei einer höheren Temperatur 39 reduziert wird.

Die zeitlichen Temperaturverläufe 34 bzw. 34a ergeben sich aus den Sensorsignalen 32 der Sensoreinrichtung 31 bzw. des Temperaturfühlers 11. Der zeitliche Temperaturverlauf 34 bzw. 34a stellt ein direktes Maß für die jeweilige Wärmekapazität 37 des Inhalts des Garraumes 2 dar.

In Figur 6 ist für das Beispiel aus Figur 5 neben den zeitlichen Temperaturverläufen 34 und 34a auch noch die entsprechende Heizleistung 36 bzw. 36a aufgetragen.

Zu Beginn des Garvorgangs wird in beiden Fällen mit maximaler Heizleistung gearbeitet, um soviel Dampf 9 wie möglich in den Garraum 2 einzubringen. Dementsprechend steigen die auch in Figur 6 abgebildeten Temperaturen entsprechend an. Bei einer geringen Beladung 40 kann bei Erreichen der Temperaturschwelle T2 die Heizleistung erheblich reduziert werden, bis bei Erreichen der Schwelltemperatur 35 die Heizleistung nochmals reduziert wird, um den Garprozess mit verminderter Leistung fortzusetzen. Bei einer geringen Beladung 40 kann folglich die Temperatur T2 als erste Schwelltemperatur 35a eingesetzt werden, während eine zweite Schwelltemperatur noch nahe der vorgesehenen Gartemperatur 49 vorgesehen sein kann.

Bei einer hohen Beladung 41 wird zunächst zu Beginn des Garvorgangs auch mit maximaler Heizleistung geheizt, um möglichst viel Dampf 9 in den Garraum 2 einzubringen. Durch die Steigung des zeitlichen Temperaturverlaufs 34 bzw. das daraus bestimmte Maß 33 für die Beladung ergibt sich, dass die maximale Heizleistung bis zum Erreichen einer weitaus höheren Schwelltemperatur 35 fortgesetzt werden kann, die nahe an der vorgesehenen Gartemperatur liegen kann und beispielsweise nur ein, zwei, drei oder vier Grad unterhalb der Seidentemperatur liegen kann. Erst bei Erreichen der Schwelltemperatur 35 wird die Heizleistung etwas gedrosselt und schließlich bei nahezu Erreichen der Gartemperatur wieder stark abgesenkt, sodass beispielsweise mit der gleichen Heizleistung der Garprozess fortgesetzt wird wie es bei einer geringen Beladung 40 der Fall ist.

In allen Fällen ist es möglich, dass die Heizleistung mehrstufig oder kontinuierlich angepasst wird. Es ist nicht nötig, dass die Heizleistung nur in ein, zwei oder drei Stufen angepasst wird. Möglich ist auch eine kontinuierliche oder quasi-kontinuierliche Anpassung der Heizleistung. Es ist auch möglich, zwei, drei, vier oder fünf oder mehr Schwelltemperaturen vorzusehen, bei denen die Heizleistung entsprechend reduziert oder erhöht wird.

Insgesamt wird durch das erfindungsgemäße Gargerät ein Gargerät 1 zur Verfügung gestellt, welches einfacher zu montieren ist, da die Baueinheit 10 idealerweise mit allen die Prozesssteuerung betreffenden Elementen versehen ist. Dadurch lässt sich die Fertigung und Montage vereinfachen. Außerdem erhält der Kunde den Vorteil, dass das Gerät einfacher zu reinigen ist. Gegebenenfalls kann noch ein Beleuchtungselement in die Baueinheit 10 integriert werden.

Dadurch, dass mehrere Dampfeinlassöffnungen 4 bis 7 auf mehreren Ebenen vorgesehen sind, kann eine homogene Dampfverteilung innerhalb des Garraumes 2 gewährleistet werden. Durch die seitliche Ausströmung des Dampfes 9 an der Rückwand 13 des Garraumes 2 wird eine besonders homogene Verteilung erzielt. Örtliche und zeitliche Temperaturunterschiede werden minimiert. Insbesondere kann ein gleichmäßiges Garen des eingebrachten Garguts 21 erreicht werden.

Gleichzeitig wird ein kostengünstiges Gargerät 1 zur Verfügung gestellt, welches auch höchsten Ansprüchen genügt. Durch die Ausgestaltung der Dampfeinlassöffnungen 4 bis 7 als Düse 18 wird die Verteilung des Dampfes nochmals verstärkt.

Die unterschiedlich steuerbaren Dampfeinlassöffnungen an den verschiedenen Ebenen ermöglichen eine flexiblere Steuerung der Dampfzufuhr, die eine hohe Dampferzeugerleistung ermöglicht und trotz der vielen Dampfeinlassöffnungen eine ausreichende Durchmischung bewirkt.

Die Dampfauslassöffnungen 8 im unteren Bereich des Garraumes 2 führen dazu, dass der jeweils kühlste Bereich der Garraumatmosphäre aus dem Garraum 2 abgeleitet wird. Die relativ hohen Einströmgeschwindigkeiten des Dampfes 9 sorgen aufgrund der Massenträgheit der Atmosphäre auch nach dem Einströmen für eine dauerhafte Bewegung innerhalb des Garraumes 2, was eine Entmischung verhindert. Dadurch, dass der eingeleitete Dampf wärmer und leichter ist, steigt dieser nach oben, während die schwerere und kältere Luft nach unten fällt. Dadurch wird eine homogenere Temperaturverteilung erreicht, sodass ungleichmäßige oder schlechte Garergebnisse vermieden werden können.

In der Aufheizphase wird in allen Fällen vorzugsweise mit maximal vorgesehener Dampfleistung beheizt, um die Aufheizphase möglich kurz zu halten.

Durch die Bestimmung eines Maßes 33 bzw. 33a für die Beladung des Garraumes 2 können die Aufheizzeiten sowohl bei großen als auch bei kleinen Beladungen kurz gehalten werden, ohne dass eine erhebliche Menge an Dampf aus dem Gerät 1 austritt. Insbesondere wird die Leistung in allen Fällen beispielsweise erst reduziert, wenn die Raumtemperatur größer 80 Grad C beträgt. Ein schnelles Durchschreiten des Temperaturbereiches zwischen 60 und 80 Grad reduziert den enzymatischen Abbau von Chlorophyll und reduziert damit die Gefahr einer unschönen Verfärbung des Lebensmittels.

Die Anordnung des Temperaturfühlers 11 an dem Dampfauslass 8 des Garraumes 2 ermöglicht eine deutliche bessere Regelung, sodass ein "Atmen" des Garraumes 2 erheblich reduziert und praktisch ganz vermieden werden kann. Insbesondere in Verbindung mit einer verbesserten Steuerung der Heizleistung kann ein besseres Garergebnis gewährleistet werden.

Der an der Dampfauslassöffnung 8 positionierte Temperaturfühler 11 befindet sich in dem durch die Dampfauslassöffnung 8 durchtretenden Gasstrom 43 und detektiert so bei einem Dampfüberschuss den heißen austretenden Dampf und bei einem Dampfmangel, der zu einem Unterdruck im Garraum führt, die kalte eintretende Luft, sodass sehr frühzeitig entsprechend entgegengesteuert werden kann. Durch eine feinfühlige Anpassung der Heizleistung an die aktuellen Gegebenheiten wird im dargestellten Ausführungsbeispiel erreicht, dass nach Erreichen der vorgesehenen Gartemperatur praktisch kein Temperaturunterschied mehr auftritt. Gleichzeitig wird dadurch der Energieverbrauch verringert, da aus dem Garraum austretender Dampf energetisch hochwertig ist und durch eine relativ große Wärmemenge ersetzt werden muss, was hier weitgehend vermieden wird.

Insgesamt wird ein kostengünstiges Gargerät 1 zur Verfügung gestellt, welches bessere Garergebnisse bei einem geringeren Energieverbrauch ermöglicht.

### Bezugszeichenliste

- 1: Gargerät
- 2: Garraum
- 3: Dampfquelle
- 4: Dampfeinlassöffnung
- 5: Dampfeinlassöffnung
- 6: Dampfeinlassöffnung
- 7: Dampfeinlassöffnung
- 8: Dampfauslassöffnung
- 9: Dampf
- 10: Baueinheit
- 11: Temperaturfühler
- 12: charakteristische Temperatur
- 13: Rückwand
- 14: Ebene
- 15: Ebene
- 16: Ebene
- 17: Ebene
- 18: Dampfdüse
- 19: unterer Bereich
- 20: Leuchtquelle
- 21: Speise, Gargut
- 21a: Speise, Gargut
- 22: Dampfführung
- 23: Garbehälter, Garblech
- 24: Aufnahmerand
- 25: Garebene
- 26: Garebene
- 27: Garebene
- 28: Halter
- 29: Dampfleitung
- 30: Steuereinrichtung
- 31: Sensoreinrichtung
- 32: Sensorsignal
- 33: Maß für die Beladung
- 33a: Maß für die Beladung
- 34: zeitlicher Temperaturverlauf
- 34a: zeitlicher Temperaturverlauf
- 35: Schwelltemperatur
- 35a: Schwelltemperatur
- 36: Heizleistung
- 36a: Heizleistung
- 37: Wärmekapazität
- 38: geringere Temperatur
- 39: höhere Temperatur
- 40: geringere Beladung
- 41: höhere Beladung
- 42: Strömungsweg
- 43: Gasstrom
- 44: Zwischenraum
- 45: Strahlrichtung
- 46: Bedienknopf
- 47: Anzeige
- 48: Zeitdauer
- 48a: Zeitdauer
- 49: Gartemperatur
- 50: Umgebung
- 51: Dampfkanal
- 52: Verengung
- 53: Dampfströmung
- 54: Wandung
- 55: Öffnung
- 100: Dampfgargerät
- T1: Temperatur
- T2: Temperatur

## Patentansprüche

1. Gargerät (1) mit wenigstens einem Garraum (2), der mehrere Garebenen (25-27) aufweist und der über wenigstens eine außerhalb des Garraumes (2) angeordnete Dampfquelle (3) beheizbar ist,
wobei an dem Garraum (2) mehrere Dampfeinlassöffnungen (4-7) vorgesehen sind, um Dampf (9) von der Dampfquelle (3) in den Garraum (2) einzuleiten,
wobei die Dampfeinlassöffnungen (4-7) auf mehreren Ebenen (14-17) höhenversetzt angeordnet sind
und die Dampfeinlassöffnungen (4-7) seitlich und etwa parallel zu einer Wandung des Garraums (2) und etwa in entgegengesetzten Richtungen ausgerichtet sind
und wobei wenigstens eine Dampfauslassöffnung (8) an dem Garraum (2) vorgesehen ist, über welche Dampf (9) aus dem Garraum (2) austreten kann und über welche der Garraum (2) mit der Umgebung in einem Gasaustausch steht,
**dadurch gekennzeichnet, dass**
die Dampfauslassöffnung (8) in einem unteren Bereich des Garraumes (2) vorgesehen ist und die Dampfeinlassöffnungen (4-7) und die Dampfauslassöffnung (8) an einer gemeinsamen Baueinheit (10) angeordnet sind, die austauschbar an dem Garraum (2) vorgesehen ist.

2. Gargerät (1) nach Anspruch 1, **dadurch gekennzeichnet, dass** an der gemeinsamen Baueinheit (10) wenigstens ein Temperaturfühler (11) zur Erfassung einer charakteristischen Temperatur (12) des Garraumes (2) angeordnet ist.

3. Gargerät (1) nach Anspruch 1 oder 2, **dadurch gekennzeichnet, dass** die gemeinsame Baueinheit (10) an der Rückwand (13) des Garraumes (2) angeordnet ist.

4. Gargerät (1) nach einem der vorhergehenden Ansprüche, **dadurch gekennzeichnet, dass** die Dampfeinlassöffnungen (4-7) wenigstens zweier Ebenen (15, 16) separat ansteuerbar sind.

5. Gargerät (1) nach einem der vorhergehenden Ansprüche, **dadurch gekennzeichnet, dass** die Dampfeinlassöffnungen (4-7) paarweise vorgesehen sind und in etwa entgegengesetzte Richtungen seitlich ausgerichtet sind, um an der Rückwand des Garraumes (13) entlang den Dampf auszulassen.

6. Gargerät (1) nach einem der vorhergehenden Ansprüche, **dadurch gekennzeichnet, dass** wenigstens eine Dampfeinlassöffnung (4-7) als Dampfdüse (18) ausgebildet ist.

7. Gargerät (1) nach einem der vorhergehenden Ansprüche, **dadurch gekennzeichnet, dass** an der gemeinsamen Baueinheit (10) genau eine Dampfauslassöffnung (8) vorgesehen ist, welche insbesondere in einem unteren Bereich (19) angeordnet ist.

8. Gargerät (1) nach einem der vorhergehenden Ansprüche, **dadurch gekennzeichnet, dass** der Temperaturfühler (11) an der Dampfauslassöffnung (8) vorgesehen ist.

9. Gargerät (1) nach einem der vorhergehenden Ansprüche, **dadurch gekennzeichnet, dass** der Temperaturfühler (11) innerhalb der Dampfauslassöffnung (8) vorgesehen ist.

10. Gargerät (1) nach einem der vorhergehenden Ansprüche, **dadurch gekennzeichnet, dass** die gemeinsame Baueinheit (10) mit wenigstens einer Leuchtquelle (20) verbunden oder ausgerüstet ist.

## Claims

1. Cooking appliance (1) comprising at least one cooking chamber (2) which has a plurality of cooking levels (25-27) and which can be heated by means of at least one steam source (3) arranged outside the cooking chamber (2), a plurality of steam inlet openings (4-7) being provided on the cooking chamber (2) for introducing steam (9) from the steam source (3) into the cooking chamber (2), the steam inlet openings (4-7) being arranged on a plurality of levels (14-17) so as to be vertically offset, and the steam inlet openings (4-7) being oriented laterally, approximately in parallel with a wall of the cooking chamber (2) and approximately in opposite directions, and at least one steam outlet opening (8) being provided on the cooking chamber (2), via which opening steam (9) can escape from the cooking chamber (2) and which opening establishes a gas exchange between the cooking chamber (2) and the surroundings, **characterised in that** the steam outlet opening (8) is provided in a lower region of the cooking chamber (2) and the steam inlet openings (4-7) and the steam outlet opening (8) are arranged on a common modular unit (10) which is provided on the cooking chamber (2) so as to be replaceable.

2. Cooking appliance (1) according to claim 1, **characterised in that** at least one temperature sensor (11) for detecting a characteristic temperature (12) of the cooking chamber (2) is arranged on the common modular unit (10).

3. Cooking appliance (1) according to either claim 1 or claim 2, **characterised in that** the common modular unit (10) is arranged on the rear wall (13) of the cooking chamber (2).

4. Cooking appliance (1) according to any of the preceding claims, **characterised in that** the steam inlet openings (4-7) of at least two levels (15, 16) can be controlled separately.

5. Cooking appliance (1) according to any of the preceding claims, **characterised in that** the steam inlet openings (4-7) are provided in pairs and are oriented laterally in approximately opposite directions in order to release the steam along the rear wall of the cooking chamber (13).

6. Cooking appliance (1) according to any of the preceding claims, **characterised in that** at least one steam inlet opening (4-7) is designed as a steam nozzle (18).

7. Cooking appliance (1) according to any of the preceding claims, **characterised in that** precisely one steam outlet opening (8) is provided on the common modular unit (10), which opening is arranged in particular in a lower region (19).

8. Cooking appliance (1) according to any of the preceding claims, **characterised in that** the temperature sensor (11) is provided on the steam outlet opening (8).

9. Cooking appliance (1) according to any of the preceding claims, **characterised in that** the temperature sensor (11) is provided within the steam outlet opening (8).

10. Cooking appliance (1) according to any of the preceding claims, **characterised in that** the common modular unit (10) is connected to or equipped with at least one illumination source (20).

## Revendications

1. Appareil de cuisson (1) comportant au moins une chambre de cuisson (2) présentant plusieurs niveaux de cuisson (25-27) et qui peut être chauffé par au moins une source de vapeur (3) disposée à l'extérieur de la chambre de cuisson (2),
plusieurs ouvertures d'entrée de vapeur (4-7) étant prévues au niveau de la chambre de cuisson (2) pour introduire de la vapeur (9) dans la chambre de cuisson (2) à partir de la source de vapeur (3),
les ouvertures d'entrée de vapeur (4-7) étant décalées verticalement sur plusieurs niveaux (14-17)
et les ouvertures d'entrée de vapeur (4-7) étant alignées latéralement et sensiblement parallèlement à une paroi de la chambre de cuisson (2) et sensiblement dans des directions opposées
et au moins une sortie de vapeur (8) étant prévue au niveau de la chambre de cuisson (2), sortie par laquelle la vapeur (9) peut s'échapper de la chambre de cuisson (2) et par laquelle la chambre de cuisson (2) a des échanges gazeux avec l'environnement,
**caractérisé en ce que**
l'ouverture de sortie de vapeur (8) est prévue dans une zone inférieure de la chambre de cuisson (2), et les ouvertures d'entrée de vapeur (4-7) et l'ouverture de sortie de vapeur (8) sont disposées sur une unité modulaire commune (10) qui est prévue au niveau de la chambre de cuisson (2) de manière à pouvoir être remplacée.

2. Appareil de cuisson (1) selon la revendication 1, **caractérisé en ce qu'**au moins un capteur de température (11) destiné à détecter une température caractéristique (12) de la chambre de cuisson (2) est disposé sur l'unité modulaire commune (10).

3. Appareil de cuisson (1) selon la revendication 1 ou la revendication 2, **caractérisé en ce que** l'unité modulaire commune (10) est disposée sur la paroi arrière (13) de la chambre de cuisson (2).

4. Appareil de cuisson (1) selon l'une des revendications précédentes, **caractérisé en ce que** les ouvertures d'entrée de vapeur (4-7) sur au moins deux niveaux (15, 16) peuvent être commandées séparément.

5. Appareil de cuisson (1) selon l'une des revendications précédentes, **caractérisé en ce que** les ouvertures d'entrée de vapeur (4-7) sont prévues par paires et sont alignées latéralement dans des directions sensiblement opposées pour évacuer la vapeur le long de la paroi arrière de la chambre de cuisson (13).

6. Appareil de cuisson (1) selon l'une des revendications précédentes, **caractérisé en ce qu'**au moins une ouverture d'entrée de vapeur (4-7) est conçue comme une buse à vapeur (18).

7. Appareil de cuisson (1) selon l'une des revendications précédentes, **caractérisé en ce qu'**exactement une ouverture de sortie de vapeur (8), qui est agencée en particulier dans une zone inférieure (19), est prévue au niveau de l'unité modulaire commune (10).

8. Appareil de cuisson (1) selon l'une des revendications précédentes, **caractérisé en ce que** le capteur de température (11) est prévu au niveau de l'ouverture de sortie de vapeur (8).

9. Appareil de cuisson (1) selon l'une des revendications précédentes, **caractérisé en ce que** le capteur de température (11) est prévu à l'intérieur de l'ouverture de sortie de vapeur (8).

10. Appareil de cuisson (1) selon l'une des revendications précédentes, **caractérisé en ce que** l'unité modulaire commune (10) est reliée à au moins une source lumineuse (20) ou en est équipé.
